# EUROPEAN PATENT SPECIFICATION

(11) **EP 3 556 484 B1**
(45) Date of publication and mention of the grant of the patent: **11.08.2021**
(21) Application number: 19168407.5
(22) Date of filing: 10.04.2019
(51) Int. Cl.: B21D 1/02, B21B 45/06, B21B 45/08, B24C 1/08, B24C 3/14, B24C 3/08, B24B 31/116, B24B 19/14, B24C 3/32, B24C 5/00, B24C 7/00

(54) **INTEGRATED TOOLING FOR ABRASIVE FLOW MACHINING**
INTEGRIERTES WERKZEUG ZUR ABRASIVEN STRÖMUNGSBEARBEITUNG
OUTILLAGE INTÉGRÉ POUR USINAGE PAR ÉCOULEMENT ABRASIF

(30) Priority: 19.04.2018 US 201815957759
(43) Date of publication of application: 23.10.2019
(73) Proprietor: Raytheon Technologies Corporation, Farmington, CT 06032 (US)
(72) Inventor: VENTURA, Anthony Patrick, South Glastonbury, CT Connecticut 06073 (US); TWELVES, Wendell V., Glastonbury, CT Connecticut 06033 (US); THAYER, Henry H., Wethersfield, CT Connecticut 06109 (US)
(74) Representative: Dehns

(56) References cited:
- EP-B1- 1 438 158
- US-A1- 2004 106 359
- US-A1- 2006 234 606
- US-A1- 2015 375 360
- US-A1- 2016 167 196
- US-A1- 2017 080 543

## Description

### FIELD

The present disclosure relates generally to a cluster-tool assembly for abrasive flow machining of a plurality of airfoils and a method for polishing surfaces of a plurality of airfoils, particularly airfoil clusters for gas turbine engines.

### BACKGROUND

Abrasive flow machining is a process with application to polishing or finishing surfaces of metal parts following initial fabrication through, for example, casting or additive manufacturing. The process has been found to be advantageous for polishing or finishing of manufactured parts having complex structural features such as, for example, internal passages or buried cavities that include surfaces that are difficult to access by other surface finishing techniques.

Abrasive flow machining has been employed as a manufacturing step in the production of surface finished airfoil clusters for gas turbine engines. The airfoil clusters may consist of a plurality of airfoils attached to a supporting rail to form a unitary structure. Due to the complex structural features of the airfoil clusters, surface polishing by abrasive flow machining may prove more effective than other polishing methods that exhibit difficulties in finishing or polishing various regions of the airfoil cluster to a desired degree.

While abrasive flow machining may provide an effective method for surface polishing of airfoil clusters, differential finishing (or uneven surface polishing) of various regions of the airfoil clusters may occur in certain cases. As a result, various surfaces of the airfoil cluster may receive more surface polishing and more difficult to reach surfaces may be left with undesirable surface roughness. Difficult to reach surface areas may include, for example, the concave surfaces and the root radii of the airfoils and the platforms located on the support rail between each adjacent pair of airfoils.

A cluster-tool assembly for abrasive flow machining of a plurality of airfoils according to the preamble of independent claim 1 is known from US 2015/375360 A1. That document also discloses a method for polishing surfaces of a plurality of airfoils, comprising: fabricating a cluster-tool assembly, the cluster-tool assembly including an airfoil cluster and a tool associated with the airfoil cluster, wherein the airfoil cluster includes a supporting rail and the plurality of airfoils spaced about the supporting rail, wherein the associated tool comprises a body and a plurality of prongs extending from the body, wherein a first airfoil of the plurality of airfoils is positioned between a first prong and a second prong of the plurality of prongs and wherein the first airfoil includes a foil tip portion associated with the body of the tool; positioning the cluster-tool assembly within an abrasive flow machine; and flowing an abrasive media through a first side channel extending between a convex foil surface of the first airfoil and a concave prong surface of the first prong and a second side channel extending between a concave foil surface of the first airfoil and a convex prong surface of the second prong.

### SUMMARY

According to a first aspect, according to independent claim 1, there is provided a cluster-tool assembly for abrasive flow machining of a plurality of airfoils, comprising: an airfoil cluster, the airfoil cluster including a supporting rail and the plurality of airfoils spaced about the supporting rail; and a sacrificial tool unitarily formed with the airfoil cluster, the sacrificial tool including a body and a plurality of prongs extending from the body; wherein the sacrificial tool of the cluster-tool assembly is made of a softer material than the material used to fabricate the airfoil cluster.

In various embodiments, a first airfoil of the plurality of airfoils is positioned between a first prong and a second prong of the plurality of prongs. In various embodiments, the first airfoil includes a foil tip portion unitarily connected to the body of the sacrificial tool. In various embodiments, the first airfoil defines a length from a leading edge to a trailing edge and a first side channel extends along the length between a convex foil surface of the first airfoil and a concave prong surface of the first prong. In various embodiments, a second side channel extends along the length between a concave foil surface of the first airfoil and a convex prong surface of the second prong.

In various embodiments, the first prong includes a first prong tip portion positioned adjacent a first platform portion of the supporting rail, defining a first platform channel that extends along the length proximate a first base portion of the convex foil surface of the first airfoil. In various embodiments, the second prong includes a second prong tip portion positioned adjacent a second platform portion of the supporting rail, defining a second platform channel that extends along the length proximate a second base portion of the concave foil surface of the first airfoil. In various embodiments, the first side channel defines a channel width along the length, the first platform channel defines a height along the length and the height is greater than the width.

In various embodiments, each one of the plurality of airfoils includes a foil tip portion unitarily connected to the body of the sacrificial tool and each one of the plurality of airfoils is positioned between a first prong and a second prong. In various embodiments, each one of the plurality of airfoils includes a convex foil surface positioned adjacent a concave prong surface of the first prong and a concave foil surface positioned adjacent a convex prong surface of the second prong. In various embodiments, each one of the plurality of airfoils defines a length from a leading edge to a trailing edge and a first side channel extends along the length between a first foil surface of each one of the plurality of airfoils and a first prong surface of an adjacent prong of the plurality of prongs.

In various embodiments, each one of the plurality of airfoils defines a length from a leading edge to a trailing edge, a first side channel extends along the length between a convex foil surface of each one of the plurality of airfoils and a concave prong surface of a first adjacent one of the plurality of prongs and a second side channel extends along the length between a concave foil surface of each one of the plurality of airfoils and a convex prong surface of a second adjacent one of the plurality of prongs.

According to a second aspect, according to independent claim 13, there is provided a method for polishing surfaces of a plurality of airfoils, comprising: fabricating a cluster-tool assembly, the cluster-tool assembly including an airfoil cluster and a sacrificial tool unitarily formed with the airfoil cluster, the sacrificial tool of the cluster-tool assembly being made of a softer material than the material used to fabricate the airfoil cluster; wherein the airfoil cluster includes a supporting rail and the plurality of airfoils spaced about the supporting rail, wherein the sacrificial tool comprises a body and a plurality of prongs extending from the body, wherein a first airfoil of the plurality of airfoils is positioned between a first prong and a second prong of the plurality of prongs and wherein the first airfoil includes a foil tip portion unitarily connected to the body of the sacrificial tool; positioning the cluster-tool assembly within an abrasive flow machine; and flowing an abrasive media through a first side channel extending between a convex foil surface of the first airfoil and a concave prong surface of the first prong and a second side channel extending between a concave foil surface of the first airfoil and a convex prong surface of the second prong.

In various embodiments, the first prong includes a first prong tip portion positioned adjacent a first platform portion of the supporting rail, defining a first platform channel that extends proximate a first base portion of the convex foil surface of the first airfoil, and the abrasive media is urged through the first platform channel. In various embodiments, the second prong includes a second prong tip portion positioned adjacent a second platform portion of the supporting rail, defining a second platform channel that extends proximate a second base portion of the concave foil surface of the first airfoil, and the abrasive media is urged through the second platform channel. In various embodiments, the method further comprises terminating the flow of abrasive media and removing any portion of the sacrificial tool that remains connected to the airfoil cluster.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a cross sectional schematic view of a gas turbine engine, in accordance with various embodiments;
FIG. 2A is a perspective schematic view of an airfoil cluster, in accordance with various embodiments;
FIG. 2B is an axial schematic view of an airfoil assembly formed using several of the airfoil clusters illustrated in FIG. 2A, in accordance with various embodiments;
FIG. 3A is a perspective schematic view of a cluster-tool assembly, comprising a sacrificial tool and an airfoil cluster, in accordance with various embodiments;
FIG. 3B is a perspective schematic view of the indicated portion of the cluster-tool assembly illustrated in FIG. 3A, in accordance with various embodiments;
FIG. 4A is a cross-sectional schematic view of an abrasive flow machine configured to finish several assemblies of sacrificial tools and airfoil clusters retained by a fixture, in accordance with various embodiments;
FIG. 4B is an axial schematic view of several assemblies of sacrificial tools and airfoil clusters retained by a fixture in an abrasive flow machine, in accordance with various embodiments;
FIG. 5 is a cross-sectional schematic view through the section 5-5 of FIG. 3A, illustrating the flow of abrasive media through side channels of the cluster-tool assembly, in accordance with various embodiments; and
FIG. 6 is a flow chart diagram, illustrating steps involved in finishing several assemblies of sacrificial tools and airfoil clusters retained by a fixture, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

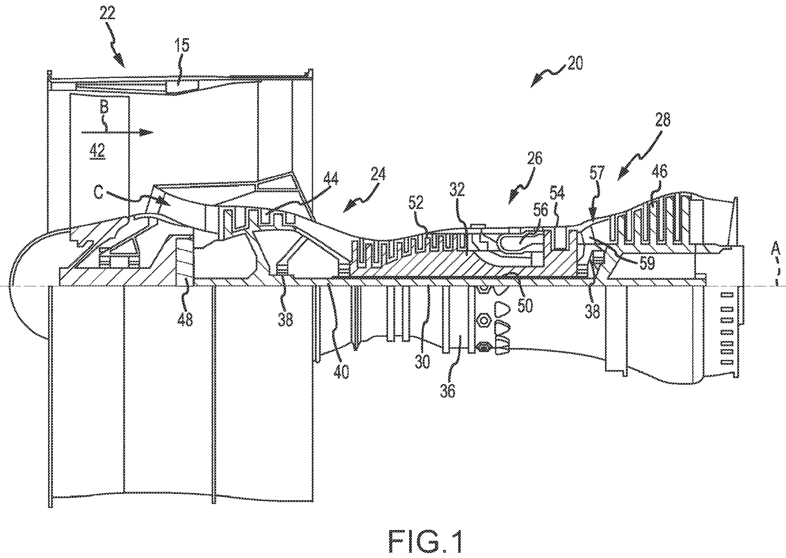

Referring now to the drawings, FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct defined within a nacelle 15, while the compressor section 24 drives air along a primary or core flow path C for compression and communication into the combustor section 26 and then expansion through the turbine section 28. Although depicted as a two-spool turbofan gas turbine engine in the disclosed non-limiting embodiment, it will be understood that the concepts described herein are not limited to use with two-spool turbofans as the teachings may be applied to other types of turbine engines, including three-spool architectures.

The gas turbine engine 20 generally includes a low speed spool 30 and a high speed spool 32 mounted for rotation about an engine central longitudinal axis A relative to an engine static structure 36 via several bearing systems 38. It should be understood that various bearing systems at various locations may alternatively or additionally be provided and the location of the several bearing systems 38 may be varied as appropriate to the application. The low speed spool 30 generally includes an inner shaft 40 that interconnects a fan 42, a low pressure compressor 44 and a low pressure turbine 46. The inner shaft 40 is connected to the fan 42 through a speed change mechanism, which in this gas turbine engine 20 is illustrated as a fan drive gear system 48 configured to drive the fan 42 at a lower speed than the low speed spool 30. The high speed spool 32 includes an outer shaft 50 that interconnects a high pressure compressor 52 and a high pressure turbine 54. A combustor 56 is arranged in the gas turbine engine 20 between the high pressure compressor 52 and the high pressure turbine 54. A mid-turbine frame 57 of the engine static structure 36 is arranged generally between the high pressure turbine 54 and the low pressure turbine 46 and may include airfoils 59 in the core flow path C for guiding the flow into the low pressure turbine 46. The mid-turbine frame 57 further supports the several bearing systems 38 in the turbine section 28. The inner shaft 40 and the outer shaft 50 are concentric and rotate via the several bearing systems 38 about the engine central longitudinal axis A, which is collinear with their longitudinal axes.

The air in the core flow path is compressed by the low pressure compressor 44 and then the high pressure compressor 52, mixed and burned with fuel in the combustor 56, and then expanded over the high pressure turbine 54 and low pressure turbine 46. The low pressure turbine 46 and the high pressure turbine 54 rotationally drive the respective low speed spool 30 and the high speed spool 32 in response to the expansion. It will be appreciated that each of the positions of the fan section 22, the compressor section 24, the combustor section 26, the turbine section 28, and the fan drive gear system 48 may be varied. For example, the fan drive gear system 48 may be located aft of the combustor section 26 or even aft of the turbine section 28, and the fan section 22 may be positioned forward or aft of the location of the fan drive gear system 48.

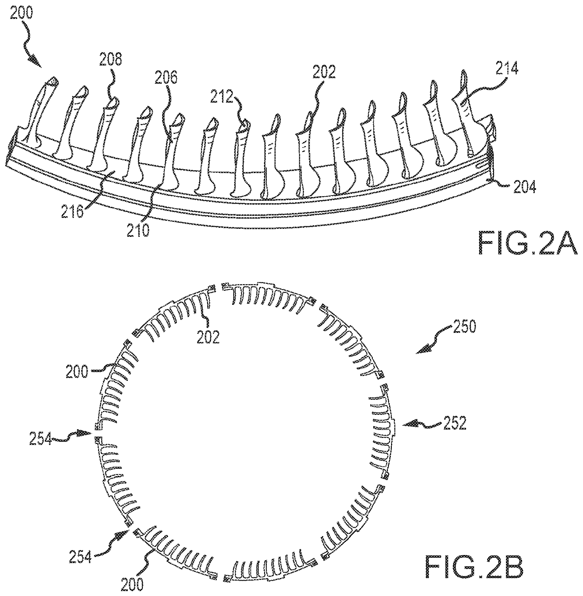

Referring now to FIG. 2A, an airfoil cluster 200 is shown. The airfoil cluster 200 may, for example, be a cluster of vanes in a stator section of one or more of the turbine sections and the compressor sections referred to above with reference to FIG. 1. In various embodiments, the airfoil cluster 200 includes a plurality of airfoils 202 attached to a supporting rail 204. In various embodiments, the airfoils 202 and the supporting rail 204 may be formed separately and then assembled to form the airfoil cluster 200. In various embodiments, each of the airfoils 202 may have a leading edge 206, a trailing edge 208 and a root radii 210 near the base of the airfoils 202, as illustrated. In addition, each of the airfoils 202 may have a concave surface 212 (pressure side of airfoil) and a convex surface 214 (suction side of airfoil). Between each adjacent pair of the plurality of airfoils 202 may be a platform 216 along a radially inward surface of the supporting rail 204, as illustrated. Throughout the disclosure, the convex and concave surfaces of the airfoils may sometimes be referred to as convex and concave foil surfaces.

Referring now to FIG. 2B, in various embodiments, an airfoil assembly 250 includes a plurality of airfoil clusters 252, each cluster comprising, for example, the components of the airfoil cluster 200 described above with reference to FIG. 2A. The plurality of airfoil clusters 252 may be interconnected at connection points 254 to form the airfoil assembly 250, which may have an annular structure, as illustrated in FIG. 2B. In various embodiments, the plurality of airfoil clusters 252 includes nine individual airfoil clusters assembled to form the airfoil assembly 250. Alternatively, the airfoil assembly 250 may comprise other numbers of airfoil clusters or, in various embodiments, a single ring-like airfoil cluster. In various embodiments, the airfoil assembly 250 may form a stage of a high pressure compressor of a gas turbine engine, such as, for example, the high pressure compressor 52 described above with reference to FIG. 1. For example, the airfoil assembly 250 may be a stator vane assembly forming one stage of a high pressure compressor. In various embodiments, the airfoil assembly 250 may be a component of another region of a gas turbine engine, such as, for example, the rotor blades or stator vanes of the low pressure compressor or the high or low pressure turbine sections described above with reference to FIG. 1.

In various embodiments, the airfoil cluster 200 may be formed from metal and be manufactured by a 3D-printing or additive manufacturing technique, such as, for example, direct metal laser sintering (DMLS). Following manufacture, in some circumstances, certain regions of the airfoil cluster 200 such as, for example, the concave surface 212, the convex surface 214, the platform 216 and the root radii 210 of each of the plurality of airfoils 202 may have rough surfaces. In order to bring the surface roughness of the various regions of the airfoil cluster 200 to a desired smoothness or to remove excess material to meet part specifications and quality regulations, the airfoil cluster 200 may require surface polishing prior to distribution and incorporation into the airfoil assembly 250 and the gas turbine engine. Typically, such surface polishing will target areas of the airfoil cluster 200 that may be characterized by high surface roughness following manufacture (e.g., the concave surface 212, the convex surface 214, the platform 216 and the root radii 210 of each of the plurality of airfoils 202). The below disclosure provides apparatus and methods that may be employed to finish or polish the regions of high surface roughness to desirable levels, in accordance with various embodiments.

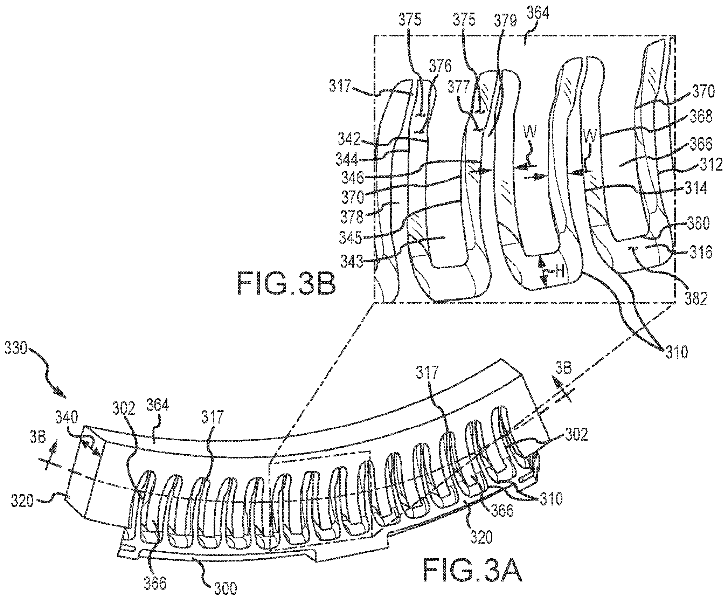

Referring now to FIGS. 3A and 3B, an airfoil cluster 300 having a plurality of airfoils 302 is illustrated in combination with a sacrificial tool 320 to form a cluster-tool assembly 330. In various embodiments, the cluster-tool assembly 330 is manufactured as a unitary component, using a 3D-printing or additive manufacturing technique, such as, for example, DMLS. In the discussion that follows, while the cluster-tool assembly 330 is a unitary component, comprising the airfoil cluster 300 and the sacrificial tool 320, it is sometimes helpful to describe the cluster-tool assembly 330 with respect to its individual components. For example, in various embodiments, the sacrificial tool 320 may be described as including a comb-like structure comprising a body 364 from which a plurality of prongs 366 may extend. Each one of the plurality of prongs 366 is dimensioned to extend between adjacent pairs of the plurality of airfoils 302 of the airfoil cluster 300 leaving spaces there between. When the cluster-tool assembly 330 is viewed as a unitary structure, the body 364 is connected between adjacent pairs of the plurality of prongs 366 to tip portions 317 corresponding to each airfoil of the plurality of airfoils 302, which results from the additive process used to fabricate the cluster-tool assembly 330 as a unitary, single-piece unit.

More specifically, each of the plurality of prongs 366 may be configured to reside between a convex surface 314 of an airfoil from the plurality of airfoils 302 and a concave surface 312 of an immediately adjacent airfoil from the plurality of airfoils 302 without coming into physical contact with the concave and convex surfaces of the airfoils. Each of the plurality of prongs 366 may have a length 340 in an axial direction that equals or exceeds a length of each of the plurality of airfoils 302, as measured from a leading edge to a trailing edge, such as the leading edge 206 and the trailing edge 208 described above with reference to FIG. 2A. In addition, each of the plurality of prongs 366 may have a concave surface 368 and a convex surface 370, each having a shape and curvature identical to, or at least substantially identical to, the concave surface 312 and the convex surface 314 of each one of the plurality of airfoils 302, respectively. In this regard, the sacrificial tool 320 may be custom designed according to the geometry of each of the plurality of airfoils 302 of the airfoil cluster 300.

Still referring to FIGS. 3A and 3B, each of the plurality of prongs 366 of the sacrificial tool 320 may define side channels 375 between each of the plurality of prongs 366 and the concave and convex surfaces of adjacent pair of airfoils. The side channels 375 may, for example, include a first side channel 376 formed between a concave surface 342 of a first prong 343 and a convex surface 344 of a first airfoil 378, and a second side channel 377 formed between a convex surface 345 of the first prong 343 and a concave surface 346 of a second airfoil 379, wherein the first airfoil 378 and the second airfoil 379 are immediately adjacent airfoils in the airfoil cluster 300. In various embodiments, each of the side channels 375 in the cluster-tool assembly 330 has a channel width, W, which may be constant or vary along the length 340 of the side channel. Further, each of the side channels 375 in the cluster-tool assembly 330 may define a flow path providing for flow of abrasive media there through during an abrasive flow polishing process and control of the velocity of the abrasive media over the concave surface 312, the convex surface 314, the leading edge, and the trailing edge of each of the plurality of airfoils 302. In addition, the channel width, W, of the side channels 375 may be fixed along the length 340 (from forward to aft) of the side channels 375. This arrangement may assist in providing a uniform flow velocity of the abrasive media across the surfaces of each of the plurality of airfoils 302, including the concave and convex surfaces of each of the airfoils. The channel width, W, of the side channels 375 may also vary depending on the polishing specifications of the airfoil cluster 300 as well as on the consistency of the abrasive media. As a non-limiting possibility, the channel width, W, of the side channels 375 may be about 0.07 inches (about 1.8 mm), but may be greater for more viscous abrasive media or lesser for less viscous abrasive media. Throughout the disclosure, the convex and concave surfaces of the airfoils may sometimes be referred to as convex and concave foil surfaces. Similarly, the convex and concave surfaces of the prongs may sometimes be referred to as convex and concave prong surfaces.

With continued reference to FIGS. 3A and 3B, each of the plurality of prongs 366 of the sacrificial tool 320 may have a tip portion 380 that, when manufactured unitarily with the airfoil cluster 300, may be positioned adjacent a platform 316, which defines a platform channel 382 there between. The abrasive media may flow through the platform channel 382 during the abrasive flow polishing process and the platform channel 382 may assist in controlling the velocity of the flow of the abrasive media over the surfaces of both the platform 322 and a corresponding pair of root radii 310. Each platform channel 382 may have a channel height, H, as measured by the distance from the tip portion 380 of each of the plurality of prongs 366 to the platform 322 corresponding thereto. In one possible arrangement, each channel height, H, may be greater than the channel width, W, of the side channels 375. As a non-limiting possibility, the channel height, H, of the platform channel 382 may be up to about two times greater than the channel width, W, of the side channels 375. For example, the channel height, H, of each platform channel 382 may be about 0.14 inches (about 3.6 mm) wide, but other channel heights are certainly possible depending on the airfoil cluster geometry or the viscosity of the abrasive media. In addition, in various embodiments, the channel height, H, of the platform channel 382 may be equal to or less than the channel width, W, of the side channels 375.

When manufactured as a unitary component, the cluster-tool assembly 330, comprising the airfoil cluster 300 and the sacrificial tool 320, may assist in targeting certain surfaces of the airfoil cluster 300 for enhanced polishing. More specifically, given that the velocity of the flow of the abrasive media through the side channels 375 and each platform channel 382 may be directly correlated with the channel width, W, and the channel height, H, and that each platform channel 382 may be wider than the side channels 375, the abrasive media may flow with higher velocities in the platform channel 382 than in the side channels 375 during the abrasive flow polishing process. Consequently, the surfaces of the airfoil cluster 300 that are located in each platform channel 382 may experience greater abrasive wear and enhanced polishing as compared to the surfaces located in the side channels 375. In similar fashion, the channel width, W, and the channel height, H, may be adjusted relative to one another to enhance the polishing of the concave and convex surfaces of each airfoil relative to the platform and root radii surfaces. In various embodiments, the channel width, W, may vary along the span or length of each airfoil, from root to tip, to enhance polishing at, for example, the tip of the airfoil relative to the root of the airfoil. As can be appreciated, the sacrificial tool 320 may have alternative configurations creating different flow channel geometries to direct enhanced abrasive activity to other selected regions of the airfoil cluster 300.

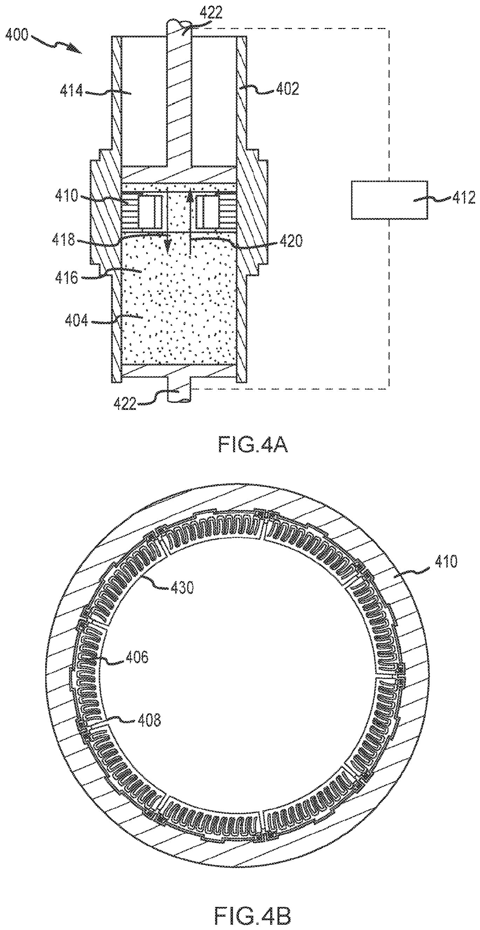

Referring now to FIGS. 4A and 4B, an abrasive flow machine 400 configured for abrasive flow polishing of one or more cluster-tool assemblies 430, such as the cluster-tool assembly 330, comprising the airfoil cluster 300 and the sacrificial tool 320, described above with reference to FIGS. 3A and 3B is illustrated. In various embodiments, the abrasive flow machine 400 comprises a housing 402 for containing an abrasive media 404. The abrasive media 404 may have a viscous, gel-like or putty-like consistency and it may be permeated with an abrasive material that may act to abrade and polish surfaces of one or more airfoil clusters 406 and wear away the material comprising one or more sacrificial tools 408 corresponding to the airfoil clusters 406. The abrasive flow machine 400 may include a fixture 410 configured to retain each of the cluster-tool assemblies 430, which comprise the airfoil clusters 406 and sacrificial tools 408, in a static position during the abrasive flow polishing process. The abrasive flow machine 400 may include a driver 412 to cause the abrasive media 404 to flow over the surfaces of the cluster-tool assemblies 430. The driver 412 may drive a pair of opposing pistons 422 to direct the abrasive media 404 back and forth in a reciprocating motion between an upper chamber 414 and a lower chamber 416 of the housing 402. In operation, the pair of opposing pistons 422 direct the abrasive media 404 in a forward direction 418, causing the abrasive media 404 to flow from the upper chamber 414 to the lower chamber 416, and in a reverse direction 420, causing the abrasive media 404 to flow from the lower chamber 416 to the upper chamber 414. During this process, the abrasive media 404 flows back and forth over the surfaces of the cluster-tool assemblies 430, including the airfoil clusters 406 and the sacrificial tools 408. As illustrated, the fixture 410 may retain a plurality of the cluster-tool assemblies 430 during abrasive flow polishing.

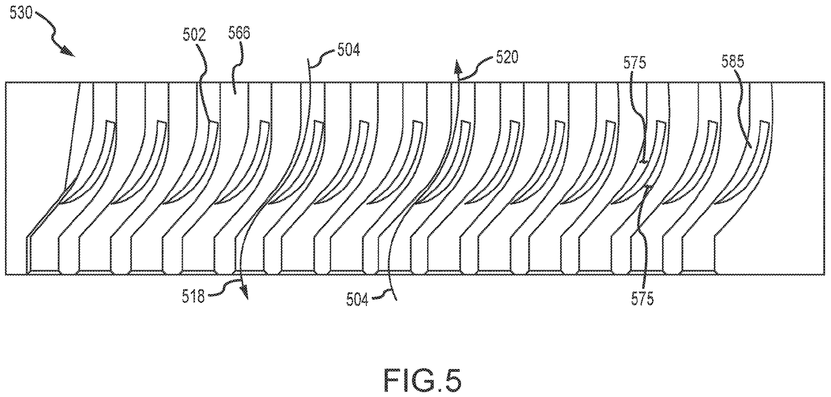

Referring now to FIG. 5, a schematic depiction of the flow of abrasive media 504 through a cross section of a cluster-tool assembly 530, such as the cluster-tool assembly 330 described above with reference to FIGS. 3A and 3B is illustrated. As illustrated, the cluster-tool assembly comprises a plurality of airfoils 502 positioned between a plurality of prongs 566. A plurality of side channels 575, such as the side channels 375 described above with reference to FIGS. 3A and 3B, extend along a length of each of the plurality of airfoils 502. Each of the side channels 575 may have a curvature that matches, or at least substantially matches, the curvature of the concave and convex surfaces of the plurality of airfoils 502. Accordingly, the flow of the abrasive media 504 in both a forward direction 518 and the reverse direction 520 may follow a curved pathway 585 having a curvature that matches, or at least substantially matches, the curvature of each of the plurality of airfoils 502.

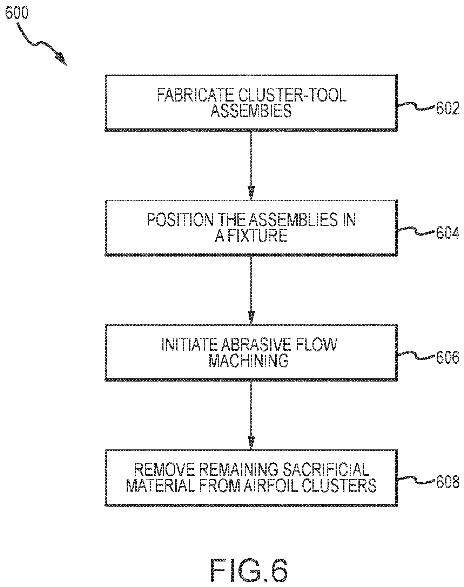

Referring now to FIG. 6, a method 600 for finishing or polishing a plurality of airfoils within a cluster-tool assembly, comprising an airfoil cluster and a sacrificial tool, is provided. Beginning with the first block 602, one or more cluster-tool assemblies, each including an airfoil cluster and a sacrificial tool, is fabricated. The cluster-tool assemblies may be fabricated using an additive process. The material used to fabricate the sacrificial portion of the cluster-tool assembly is made of a softer material than the material used to fabricate the airfoil cluster. In a second step 604, the cluster-tool assemblies are positioned within and secured to a fixture and the fixture is placed within an abrasive flow machine. In a third step 606, abrasive flow machining is performed. In various embodiments, the abrasive flow machining, such as that described above with reference to FIGS. 4A and 4B, contemplates reciprocating motion of an abrasive material through side channels and platform channels within the cluster-tool assemblies, such that the airfoils are polished while the sacrificial tool is abraded away. Once the flow of the abrasive media is initiated, the curvature and geometries of the side channels and the platform channels (which may vary depending on the design of the airfoil clusters and sacrificial tool components of the cluster-tool assemblies) may assist in controlling the direction and velocity of the flow of the abrasive media over the surfaces of the airfoil cluster in order to target specific regions (*e.g*., the concave and convex airfoil surfaces, the platforms and the root radii) of the airfoil clusters for enhanced abrasion and polishing or to assist preventing abrasive wear on selected regions of the airfoil. In a fourth step 608, any residual material from the sacrificial tools is removed from the airfoil clusters.

The foregoing provides an apparatus and method that may be used to enhance post-processing (*e.g*., finishing or polishing) of components by abrasive flow machining. This is accomplished by fabricating a sacrificial tool into the component (*e.g*., an airfoil cluster) and exposing the combination to abrasive flow media. The sacrificial component is configured to beneficially guide the abrasive flow media toward regions of the component that are either difficult to reach or require focused smoothing or polishing of undesired roughness. Although this approach is particularly amenable to components made through additive manufacturing, the same principles according to the disclosure may be applied to other methods of manufacture, such as casting, used to create the combination of a desired component and sacrificial tool having a geometry configured to tailor the flow of abrasive material about various surfaces of the component.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. The scope of the disclosure is accordingly to be limited by nothing other than the appended claims, in which reference to an element in the singular is not intended to mean "one and only one" unless explicitly so stated, but rather "one or more." After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A cluster-tool assembly (330; 530) for abrasive flow machining of a plurality of airfoils (302; 502), comprising:
an airfoil cluster (200, 252; 300; 406), the airfoil cluster (200, 252; 300; 406) including a supporting rail (204) and the plurality of airfoils (302; 502) spaced about the supporting rail (204); and **characterised by**
a sacrificial tool (320) unitarily formed with the airfoil cluster (200, 252; 300; 406), the sacrificial tool (320) including a body (364) and a plurality of prongs (366) extending from the body (364);
wherein the sacrificial tool (320) of the cluster-tool assembly (330; 530) is made of a softer material than the material used to fabricate the airfoil cluster (200, 252; 300; 406).

2. The cluster-tool assembly (330; 530) of claim 1, wherein a first airfoil (378) of the plurality of airfoils (302; 502) is positioned between a first prong (343) and a second prong of the plurality of prongs (366).

3. The cluster-tool assembly (330; 530) of claim 2, wherein the first airfoil (378) includes a foil tip portion (380) unitarily connected to the body (364) of the sacrificial tool (320).

4. The cluster-tool assembly (330; 530) of claim 3, wherein the first airfoil (378) defines a length from a leading edge (206) to a trailing edge (208) and wherein a first side channel (376) extends along the length between a convex foil surface (344) of the first airfoil (378) and a concave prong surface (342) of the first prong (343).

5. The cluster-tool assembly (330; 530) of claim 4, wherein a second side channel (377) extends along the length between a concave foil surface (346) of the first airfoil (378) and a convex prong surface (345) of the second prong.

6. The cluster-tool assembly (330; 530) of claim 5, wherein the first prong (343) includes a first prong tip portion (380) positioned adjacent a first platform portion (316) of the supporting rail (204), defining a first platform channel (382) that extends along the length proximate a first base portion of the convex foil surface (344) of the first airfoil (378).

7. The cluster-tool assembly (330; 530) of claim 6, wherein the second prong includes a second prong tip portion (380) positioned adjacent a second platform portion (316) of the supporting rail (204), defining a second platform channel (382) that extends along the length proximate a second base portion of the concave foil surface (346) of the first airfoil (378),

8. The cluster-tool assembly (330; 530) of claim 6 or 7, wherein the first side channel (376) defines a channel width along the length, wherein the first platform channel (382) defines a channel height along the length and wherein the channel height is greater than the channel width.

9. The cluster tool assembly (330; 530) of any of claims 1 to 8, wherein each one of the plurality of airfoils (302; 502) includes a foil tip portion (380) unitarily connected to the body (364) of the sacrificial tool (320) and wherein each one of the plurality of airfoils (302; 502) is positioned between a first prong (343) and a second prong.

10. The cluster tool assembly of claim 9, wherein each one of the plurality of airfoils (302; 502) includes a convex foil surface (344) positioned adjacent a concave prong surface (342) of the first prong (343) and a concave foil surface (346) positioned adjacent a convex prong surface (345) of the second prong.

11. The cluster-tool assembly (330; 530) of claim 10, wherein each one of the plurality of airfoils (302; 502) defines a length from a leading edge (206) to a trailing edge (208) and wherein a first side channel (376) extends along the length between a first foil surface of each one of the plurality of airfoils (302; 502) and a first prong surface of an adjacent prong of the plurality of prongs (366).

12. The cluster-tool assembly (330; 530) of claim 9, 10 or 11, wherein each one of the plurality of airfoils (302; 502) defines a length from a leading edge (206) to a trailing edge (208) and wherein a first side channel (376) extends along the length between a convex foil surface (344) of each one of the plurality of airfoils (302; 502) and a concave prong surface (342) of a first adjacent one of the plurality of prongs (366) and wherein a second side channel (377) extends along the length between a concave foil surface (346) of each one of the plurality of airfoils (302; 502) and a convex prong surface (345) of a second adjacent one of the plurality of prongs (366).

13. A method for polishing surfaces of a plurality of airfoils (302; 502), comprising:
fabricating a cluster-tool assembly (330; 530), the cluster-tool assembly (330; 530) including an airfoil cluster (200, 252; 300; 406) and a sacrificial tool (320) unitarily formed with the airfoil cluster (200, 252; 300; 406), the sacrificial tool (320) of the cluster-tool assembly (330; 530) being made of a softer material than the material used to fabricate the airfoil cluster (200, 252; 300; 406);
wherein the airfoil cluster (200, 252; 300; 406) includes a supporting rail (204) and the plurality of airfoils (302; 502) spaced about the supporting rail (204), wherein the sacrificial tool (320) comprises a body (364) and a plurality of prongs (366) extending from the body (364), wherein a first airfoil (378) of the plurality of airfoils (302; 502) is positioned between a first prong (343) and a second prong of the plurality of prongs (366) and wherein the first airfoil (378) includes a foil tip portion (380) unitarily connected to the body (364) of the sacrificial tool (320);
positioning the cluster-tool assembly (330; 530) within an abrasive flow machine (400); and
flowing an abrasive media (404) through a first side channel (376) extending between a convex foil surface (344) of the first airfoil (378) and a concave prong surface (342) of the first prong (343) and a second side channel (377) extending between a concave foil surface (346) of the first airfoil (378) and a convex prong surface (345) of the second prong.

14. The method of claim 13, wherein the first prong (343) includes a first prong tip portion (380) positioned adjacent a first platform portion (316) of the supporting rail (204), defining a first platform channel (382) that extends proximate a first base portion of the convex foil surface (344) of the first airfoil (378) and wherein the abrasive media (404) is urged through the first platform channel (382),
wherein, optionally, the second prong includes a second prong tip portion (380) positioned adjacent a second platform portion (316) of the supporting rail (204), defining a second platform channel (382) that extends proximate a second base portion of the concave foil surface (346) of the first airfoil (378) and wherein the abrasive media (404) is urged through the second platform channel (382).

15. The method of claim 13 or claim 14, further comprising terminating the flow of abrasive media (404) and removing any portion of the sacrificial tool (320) that remains connected to the airfoil cluster (200, 252; 300; 406).

## Patentansprüche

1. Gruppen-Werkzeug-Anordnung (330; 530) zum Druckfließläppen einer Vielzahl von Schaufelprofilen (302; 502), umfassend:
eine Schaufelprofilgruppe (200, 252; 300; 406), wobei die Schaufelprofilgruppe (200, 252; 300; 406) eine Tragschiene (204) und die Vielzahl von Schaufelprofilen (302; 502), die um die Tragschiene (204) beabstandet sind, beinhaltet; und **gekennzeichnet durch**
ein Opferwerkzeug (320), das einstückig mit der Schaufelprofilgruppe (200, 252; 300; 406) ausgebildet ist, wobei das Opferwerkzeug (320) einen Körper (364) und eine Vielzahl von Zinken (366), die sich von dem Körper (364) aus erstrecken, beinhaltet;
wobei das Opferwerkzeug (320) der Gruppen-Werkzeug-Anordnung (330; 530) aus einem weicheren Material als das Material, das zur Herstellung der Schaufelprofilgruppe (200, 252; 300; 406) verwendet wurde, hergestellt ist.

2. Gruppen-Werkzeug-Anordnung (330; 530) nach Anspruch 1, wobei ein erstes Schaufelprofil (378) aus der Vielzahl von Schaufelprofilen (302; 502) zwischen einer ersten Zinke (343) und einer zweiten Zinke aus der Vielzahl von Zinken (366) angeordnet ist.

3. Gruppen-Werkzeug-Anordnung (330; 530) nach Anspruch 2, wobei das erste Schaufelprofil (378) einen Profilspitzenabschnitt (380) beinhaltet, der einstückig mit dem Körper (364) des Opferwerkzeugs (320) verbunden ist.

4. Gruppen-Werkzeug-Anordnung (330; 530) nach Anspruch 3, wobei das erste Schaufelprofil (378) eine Länge von einer Vorderkante (206) zu einer Hinterkante (208) definiert und wobei sich ein erster Seitenkanal (376) entlang der Länge zwischen einer konvexen Profilfläche (344) des ersten Schaufelprofils (378) und einer konkaven Zinkenfläche (342) der ersten Zinke (343) erstreckt.

5. Gruppen-Werkzeug-Anordnung (330; 530) nach Anspruch 4, wobei sich ein zweiter Seitenkanal (377) entlang der Länge zwischen einer konkaven Profilfläche (346) des ersten Schaufelprofils (378) und einer konvexen Zinkenfläche (345) der zweiten Zinke erstreckt.

6. Gruppen-Werkzeug-Anordnung (330; 530) nach Anspruch 5, wobei die erste Zinke (343) einen ersten Zinkenspitzenabschnitt (380) beinhaltet, der angrenzend an einen ersten Plattformabschnitt (316) der Tragschiene (204) angeordnet ist, wodurch ein erster Plattformkanal (382) definiert wird, der sich entlang der Länge nahe einem ersten Basisabschnitt der konvexen Profilfläche (344) des ersten Schaufelprofils (378) erstreckt.

7. Gruppen-Werkzeug-Anordnung (330; 530) nach Anspruch 6, wobei die zweite Zinke einen zweiten Zinkenspitzenabschnitt (380) beinhaltet, der angrenzend an einen zweiten Plattformabschnitt (316) der Tragschiene (204) angeordnet ist, wodurch ein zweiter Plattformkanal (382) definiert wird, der sich entlang der Länge nahe einem zweiten Basisabschnitt der konkaven Profilfläche (346) des ersten Schaufelprofils (378) erstreckt,

8. Gruppen-Werkzeug-Anordnung (330; 530) nach Anspruch 6 oder 7, wobei der erste Seitenkanal (376) eine Kanalbreite entlang der Länge definiert, wobei der erste Plattformkanal (382) eine Kanalhöhe entlang der Länge definiert und wobei die Kanalhöhe größer als die Kanalbreite ist.

9. Gruppen-Werkzeug-Anordnung (330; 530) nach einem der Ansprüche 1 bis 8, wobei jedes aus der Vielzahl von Schaufelprofilen (302; 502) einen Profilspitzenabschnitt (380) beinhaltet, der einstückig mit dem Körper (364) des Opferwerkzeugs (320) verbunden ist und wobei jedes aus der Vielzahl von Schaufelprofilen (302; 502) zwischen einer ersten Zinke (343) und einer zweiten Zinke angeordnet ist.

10. Gruppen-Werkzeug-Anordnung nach Anspruch 9, wobei jedes aus der Vielzahl von Schaufelprofilen (302; 502) eine konvexe Profilfläche (344), die angrenzend an eine konkave Zinkenfläche (342) der ersten Zinke (343) angeordnet ist, und eine konkave Profilfläche (346), die angrenzend an eine konvexe Zinkenfläche (345) der zweiten Zinke angeordnet ist, beinhaltet.

11. Gruppen-Werkzeug-Anordnung (330; 530) nach Anspruch 10, wobei jedes aus der Vielzahl von Schaufelprofilen (302; 502) eine Länge von einer Vorderkante (206) zu einer Hinterkante (208) definiert und wobei sich ein erster Seitenkanal (376) entlang der Länge zwischen einer ersten Profilfläche jedes aus der Vielzahl von Schaufelprofilen (302; 502) und einer ersten Zinkenfläche einer angrenzenden Zinke aus der Vielzahl von Zinken (366) erstreckt.

12. Gruppen-Werkzeug-Anordnung (330; 530) nach Anspruch 9, 10 oder 11, wobei jedes aus der Vielzahl von Schaufelprofilen (302; 502) eine Länge von einer Vorderkante (206) zu einer Hinterkante (208) definiert und wobei sich ein erster Seitenkanal (376) entlang der Länge zwischen einer konvexen Profilfläche (344) jedes aus der Vielzahl von Schaufelprofilen (302; 502) und einer konkaven Zinkenfläche (342) einer ersten angrenzenden aus der Vielzahl von Zinken (366) erstreckt und wobei sich ein zweiter Seitenkanal (377) entlang der Länge zwischen einer konkaven Profilfläche (346) jedes aus der Vielzahl von Schaufelprofilen (302; 502) und einer konvexen Zinkenfläche (345) einer zweiten angrenzenden aus der Vielzahl von Zinken (366) erstreckt.

13. Verfahren zum Polieren von Oberflächen einer Vielzahl von Schaufelprofilen (302; 502), umfassend:
Herstellen einer Gruppen-Werkzeug-Anordnung (330; 530), wobei die Gruppen-Werkzeug-Anordnung (330; 530) eine Schaufelprofilgruppe (200, 252; 300; 406) und ein Opferwerkzeug (320), das einstückig mit der Schaufelprofilgruppe (200, 252; 300; 406) verbunden ist, beinhaltet, wobei das Opferwerkzeug (320) der Gruppen-Werkzeug-Anordnung (330; 530) aus einem weicheren Material als das Material, das zur Herstellung der Schaufelprofilgruppe (200, 252; 300; 406) verwendet wurde, hergestellt ist;
wobei die Schaufelprofilgruppe (200, 252; 300; 406) eine Tragschiene (204) und die Vielzahl von Schaufelprofilen (302; 502), die um die Tragschiene (204) beabstandet sind, beinhaltet, wobei das Opferwerkzeug (320) einen Körper (364) und eine Vielzahl von Zinken (366), die sich von dem Körper (364) aus erstrecken, beinhaltet, wobei ein erstes Schaufelprofil (378) aus der Vielzahl von Schaufelprofilen (302; 502) zwischen einer ersten Zinke (343) und einer zweiten Zinke aus der Vielzahl von Zinken (366) angeordnet ist und wobei das erste Schaufelprofil (378) einen Profilspitzenabschnitt (380) beinhaltet, der einstückig mit dem Körper (364) des Opferwerkzeugs (320) verbunden ist;
Anordnen der Gruppen-Werkzeug-Anordnung (330; 530) innerhalb eines Druckfließläppgeräts (400); und
Strömenlassen eines abrasiven Mediums (404) durch einen ersten Seitenkanal (376), der sich zwischen einer konvexen Profilfläche (344) des ersten Schaufelprofils (378) und einer konkaven Zinkenfläche (342) der ersten Zinke (343) erstreckt, und einen zweiten Seitenkanal (377), der sich zwischen einer konkaven Profilfläche (346) des ersten Schaufelprofils (378) und einer konvexen Zinkenfläche (345) der zweiten Zinke erstreckt.

14. Verfahren nach Anspruch 13, wobei die erste Zinke (343) einen ersten Zinkenspitzenabschnitt (380) beinhaltet, der angrenzend an einen ersten Plattformabschnitt (316) der Tragschiene (204) angeordnet ist, wodurch ein erster Plattformkanal (382) definiert wird, der sich nahe einem ersten Basisabschnitt der konvexen Profilfläche (344) des ersten Schaufelprofils (378) erstreckt, und wobei das abrasive Medium (404) durch den ersten Plattformkanal (382) gedrückt wird, wobei, optional, die zweite Zinke einen zweiten Zinkenspitzenabschnitt (380) beinhaltet, der angrenzend an einen zweiten Plattformabschnitt (316) der Tragschiene (204) angeordnet ist, wodurch ein zweiter Plattformkanal (382) definiert wird, der sich nahe einem zweiten Basisabschnitt der konkaven Profilfläche (346) des ersten Schaufelprofils (378) erstreckt und wobei das abrasive Medium (404) durch den zweiten Plattformkanal (382) gedrückt wird.

15. Verfahren nach Anspruch 13 oder Anspruch 14, ferner das Beenden des Stroms des abrasiven Mediums (404) und das Entfernen jedes Teils des Opferwerkzeugs (320), der noch mit der Schaufelprofilgruppe (200, 252; 300; 406) verbunden ist, umfassend.

## Revendications

1. Ensemble d'outils groupés (330 ; 530) pour usinage par écoulement abrasif d'une pluralité de profils aérodynamiques (302 ; 502), comprenant :
un groupe de profils aérodynamiques (200, 252 ; 300 ; 406), le groupe de profils aérodynamiques (200, 252 ; 300 ; 406) comportant un rail de support (204) et la pluralité de profils aérodynamiques (302 ; 502) espacés autour du rail de support (204) ; et **caractérisé par**
un outil sacrificiel (320) formé d'un seul tenant avec le groupe de profils aérodynamiques (200, 252 ; 300 ; 406), l'outil sacrificiel (320) comportant un corps (364) et une pluralité de dents (366) s'étendant depuis le corps (364) ;
dans lequel l'outil sacrificiel (320) de l'ensemble d'outils groupés (330 ; 530) est constitué d'un matériau plus souple que le matériau utilisé pour fabriquer le groupe de profils aérodynamiques (200, 252 ; 300 ; 406).

2. Ensemble d'outils groupés (330 ; 530) selon la revendication 1, dans lequel un premier profil aérodynamique (378) de la pluralité de profils aérodynamiques (302 ; 502) est positionné entre une première dent (343) et une seconde dent de la pluralité de dents (366).

3. Ensemble d'outils groupés (330 ; 530) selon la revendication 2, dans lequel le premier profil aérodynamique (378) comporte une partie d'extrémité portante (380) reliée d'un seul tenant au corps (364) de l'outil sacrificiel (320).

4. Ensemble d'outils groupés (330 ; 530) selon la revendication 3, dans lequel le premier profil aérodynamique (378) définit une longueur depuis un bord d'attaque (206) vers un bord de fuite (208) et dans lequel un premier canal latéral (376) s'étend sur la longueur entre une surface portante convexe (344) du premier profil aérodynamique (378) et une surface de dent concave (342) de la première dent (343).

5. Ensemble d'outils groupés (330 ; 530) selon la revendication 4, dans lequel un second canal latéral (377) s'étend sur la longueur entre une surface portante concave (346) du premier profil aérodynamique (378) et une surface de dent convexe (345) de la seconde dent.

6. Ensemble d'outils groupés (330 ; 530) selon la revendication 5, dans lequel la première dent (343) comporte une première partie d'extrémité de dent (380) positionnée de manière adjacente à une première partie de plate-forme (316) du rail de support (204), définissant un premier canal de plate-forme (382) qui s'étend sur la longueur à proximité d'une première partie de base de la surface portante convexe (344) du premier profil aérodynamique (378).

7. Ensemble d'outils groupés (330 ; 530) selon la revendication 6, dans lequel la seconde dent comporte une seconde partie d'extrémité de dent (380) positionnée de manière adjacente à une seconde partie de plate-forme (316) du rail de support (204), définissant un second canal de plate-forme (382) qui s'étend sur la longueur à proximité d'une seconde partie de base de la surface portante concave (346) du premier profil aérodynamique (378),

8. Ensemble d'outils groupés (330 ; 530) selon la revendication 6 ou 7, dans lequel le premier canal latéral (376) définit une largeur de canal sur la longueur, dans lequel le premier canal de plate-forme (382) définit une hauteur de canal sur la longueur et dans lequel la hauteur de canal est supérieure à la largeur de canal.

9. Ensemble d'outils groupés (330 ; 530) selon l'une quelconque des revendications 1 à 8, dans lequel chacun de la pluralité de profils aérodynamiques (302 ; 502) comporte une partie d'extrémité portante (380) reliée d'un seul tenant au corps (364) de l'outil sacrificiel (320) et dans lequel chacun de la pluralité de profils aérodynamiques (302 ; 502) est positionné entre une première dent (343) et une seconde dent.

10. Ensemble d'outils groupés selon la revendication 9, dans lequel chacun de la pluralité de profils aérodynamiques (302 ; 502) comporte une surface portante convexe (344) positionnée de manière adjacente à une surface de dent concave (342) de la première dent (343) et une surface portante concave (346) positionnée de manière adjacente à une surface de dent convexe (345) de la seconde dent.

11. Ensemble d'outils groupés (330 ; 530) selon la revendication 10, dans lequel chacun de la pluralité de profils aérodynamiques (302 ; 502) définit une longueur depuis un bord d'attaque (206) vers un bord de fuite (208) et dans lequel un premier canal latéral (376) s'étend sur la longueur entre une première surface portante de chacun de la pluralité de profils aérodynamiques (302 ; 502) et une première surface de dent d'une dent adjacente de la pluralité de dents (366).

12. Ensemble d'outils groupés (330 ; 530) selon la revendication 9, 10 ou 11, dans lequel chacun de la pluralité de profils aérodynamiques (302 ; 502) définit une longueur depuis un bord d'attaque (206) vers un bord de fuite (208) et dans lequel un premier canal latéral (376) s'étend sur la longueur entre une surface portante convexe (344) de chacun de la pluralité de profils aérodynamiques (302 ; 502) et une surface de dent concave (342) d'une première dent adjacente de la pluralité de dents (366) et dans lequel un second canal latéral (377) s'étend sur la longueur entre une surface portante concave (346) de chacun de la pluralité de profils aérodynamiques (302 ; 502) et une surface de dent convexe (345) d'une seconde dent adjacente de la pluralité de dents (366).

13. Procédé de polissage de surfaces d'une pluralité de profils aérodynamiques (302 ; 502), comprenant :
la fabrication d'un ensemble d'outils groupés (330 ; 530), l'ensemble d'outils groupés (330 ; 530) comportant un groupe de profils aérodynamiques (200, 252 ; 300 ; 406) et un outil sacrificiel (320) formé d'un seul tenant avec le groupe de profils aérodynamiques (200, 252 ; 300 ; 406), l'outil sacrificiel (320) de l'ensemble d'outils groupés (330 ; 530) étant constitué d'un matériau plus souple que le matériau utilisé pour fabriquer le groupe de profils aérodynamiques (200, 252 ; 300 ; 406) ;
dans lequel le groupe de profils aérodynamiques (200, 252 ; 300 ; 406) comporte un rail de support (204) et la pluralité de profils aérodynamiques (302 ; 502) espacés autour du rail de support (204), dans lequel l'outil sacrificiel (320) comprend un corps (364) et une pluralité de dents (366) s'étendant depuis le corps (364), dans lequel un premier profil aérodynamique (378) de la pluralité de profils aérodynamiques (302 ; 502) est positionné entre une première dent (343) et une seconde dent de la pluralité de dents (366) et dans lequel le premier profil aérodynamique (378) comporte une partie d'extrémité portante (380) reliée d'un seul tenant au corps (364) de l'outil sacrificiel (320) ;
le positionnement de l'ensemble d'outils groupés (330 ; 530) à l'intérieur d'une machine à écoulement abrasif (400) ; et
l'écoulement d'un milieu abrasif (404) à travers un premier canal latéral (376) s'étendant entre une surface portante convexe (344) du premier profil aérodynamique (378) et une surface de dent concave (342) de la première dent (343) et un second canal latéral (377) s'étendant entre une surface portante concave (346) du premier profil aérodynamique (378) et une surface de dent convexe (345) de la seconde dent.

14. Procédé selon la revendication 13, dans lequel la première dent (343) comporte une première partie d'extrémité de dent (380) positionnée de manière adjacente à une première partie de plate-forme (316) du rail de support (204), définissant un premier canal de plate-forme (382) qui s'étend à proximité d'une première partie de base de la surface portante convexe (344) du premier profil aérodynamique (378) et dans lequel le milieu abrasif (404) est poussé à travers le premier canal de plate-forme (382),
dans lequel, éventuellement, la seconde dent comporte une seconde partie d'extrémité de dent (380) positionnée de manière adjacente à une seconde partie de plate-forme (316) du rail de support (204), définissant un second canal de plate-forme (382) qui s'étend à proximité d'une seconde partie de base de la surface portante concave (346) du premier profil aérodynamique (378) et dans lequel le milieu abrasif (404) est poussé à travers le second canal de plate-forme (382).

15. Procédé selon la revendication 13 ou la revendication 14, comprenant en outre l'arrêt de l'écoulement de milieu abrasif (404) et le retrait de toute partie de l'outil sacrificiel (320) qui reste reliée au groupe de profils aérodynamiques (200, 252 ; 300 ; 406) .
